Europäisches Patentamt

European Patent Office

Office européen des brevets

(11) Numéro de publication: **0 082 529**
**B1**

(12) **FASCICULE DE BREVET EUROPEEN**

(45) Date de publication du fascicule du brevet: **19.06.85**

(51) Int. Cl.⁴: **H 04 B 3/23**, H 04 M 9/08

(21) Numéro de dépôt: **82111852.8**

(22) Date de dépôt: **21.12.82**

(54) **Annulateur numerique d'echos.**

(30) Priorité: **23.12.81 FR 8124077**

(43) Date de publication de la demande:
**29.06.83 Bulletin 83/26**

(45) Mention de la délivrance du brevet:
**19.06.85 Bulletin 85/25**

(84) Etats contractants désignés:
**BE DE FR GB IT LU NL**

(56) Documents cités:
**US-A-3 732 410**

(73) Titulaire: **COMPAGNIE INDUSTRIELLE DES TELECOMMUNICATIONS CIT-ALCATEL S.A.** dite:
**12, rue de la Baume**
**F-75008 Paris (FR)**

(72) Inventeur: **Le Bourlot, Jean**
**Le Mesnil**
**F-91530 Saint-Cheron (FR)**
Inventeur: **Levy, Michel**
**63 Domaine de Montvoisin Gometz-la-Ville**
**F-91400 Orsay (FR)**

(74) Mandataire: **Weinmiller, Jürgen et al**
**Zeppelinstrasse 63**
**D-8000 München 80 (DE)**

Courier Press, Leamington Spa, England.

**Description**

La présente invention concerne la transmission téléphonique et plus particulièrement l'annulation des échos d'origine acoustique présents sur une voie téléphonique et dus à un couplage acoustique entre microphone et haut-parleur.

Un annuleur d'échos est un dispositif qui engendre un écho synthétique à partir du signal à l'origine de l'écho réel et qui oppose cet écho synthétique à l'écho réel dans le signal affecté par l'écho réel afin d'obtenir un écho résiduel aussi faible que possible. Son fonctionnement est basé sur le fait que l'on peut considérer le parcours d'un signal d'écho comme un filtre linéaire synthétisable. Il comporte un filtre adaptatif qui engendre l'écho synthétique et qui est réglé de manière à minimiser la corrélation entre le signal à l'origine de l'écho et celui affecté par l'écho résiduel.

La plupart des annuleurs d'échos pour voie téléphonique sont réalisés sous forme numérique et prévus pour traiter des signaux disponibles sous forme d'une suite d'échantillons numériques délivrés à une cadence régulière 1/T supérieure à celle de Nyquist. Leur filtre adaptatif est formé d'un filtre transversal non récursif à domaine de temps comportant une ligne à retard avec des prises intermédiaires espacées de la période d'échantillonnage T et une centrale de calcul effectuant au cours de chaque période d'échantillonnage T une somme pondérée des échantillons présents sur les prises intermédiaires de la ligne à retard ainsi que la mise à jour des coefficients de pondération (par exemple US—A—3 732 410).

La longueur de la ligne à retard détermine la longueur maximale de la réponse impulsionnelle du filtre adaptatif qui, elle même doit se rapprocher du temps de réverbération des échos que l'on cherche à annuler. Le temps de réverbération d'un écho d'origine acoustique peut atteindre facilement plusieurs centaines de millisecondes. Comme la période d'échantillonnage T adoptée est celle de 125 µs de codage MIC on se trouve rapidement confronté avec un nombre important de coefficients de pondération qu'il faut utiliser et mettre à jour. La limite pratique imposée par un centrale de calcul de taille raisonnable est de l'ordre de 250 coefficients de pondération ce qui correspond pour le filtre adaptatif d'un annuleur d'échos de l'art antérieur à une réponse impulsionnelle d'une durée maximale de l'ordre d'une trentaine de millisecondes, nettement insuffisante pour traiter un écho d'origine acoustique.

La présente invention a pour but de repousser cette limite sans pour autant augmenter la quantité des calculs effectués au cours d'une période T d'échantillonnage.

Elle a pour objet un annuleur numérique d'échos pour voie téléphonique prévu pour traiter des signaux de voie téléphonique échantillonnés à une cadence régulière 1/T. Cet annuleur d'échos comporte un filtre adaptatif formé d'un filtre transversal non récursif à domaine de temps comportant une ligne à retard avec des prises intermédiaires espacées du double 2T de la période d'échantillonnage.

La pratique monte qu'un tel annuleur d'échos permet de traiter des durées d'échos deux fois plus long avec le même nombre d'opérations et la même qualité finale que les annuleurs de l'art antérieur ou encore des durées d'échos identiques avec moitié moins d'opérations et même qualité finale que les dispositifs de l'art antérieur.

Selon un mode préféré de réalisation chaque échantillon du signal à l'origine de l'écho est remplacé par sa demi-somme avec l'échantillon qui le précède avant d'être appliqué à l'entrée de la ligne à retard du filtre adaptatif.

D'autres caractéristiques et avantages de l'invention ressortiront des revendications jointes et de la description ci-après de plusieurs modes de réalisations donnés à titre d'exemples. Cette description sera faite en regard du dessin dans lequel:

la figure 1 représente un annuleur d'échos de l'art antérieur utilisé avec un téléphone mains libres,

la figure 2 représente un annuleur d'échos selon l'invention également utilisé avec un téléphone mains libres,

la figure 3 est le schéma d'un filtre numérique pouvant être placé devant l'une des entrées de l'annuleur d'échos de la figure précédente

et la figure 4 représente une variante de l'annuleur d'échos de la figure 2.

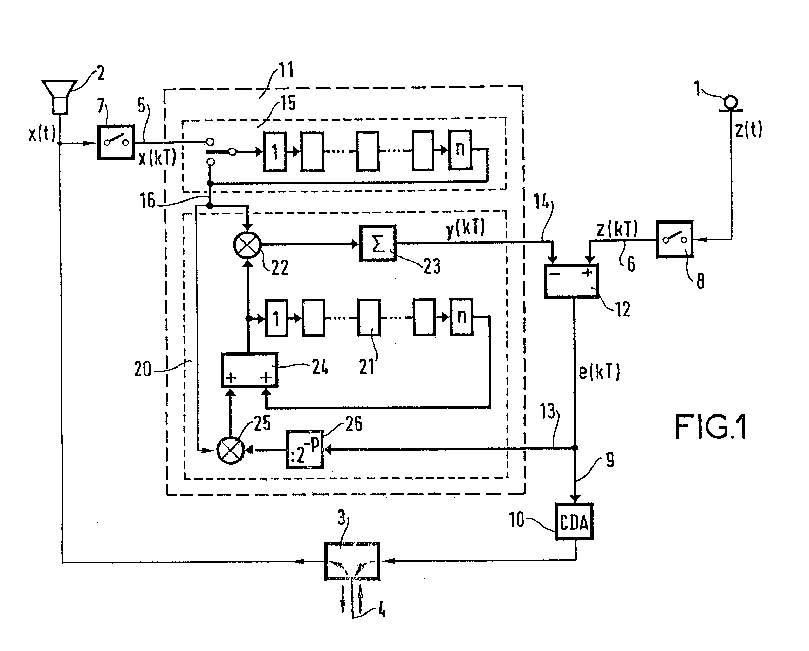

La figure 1 détaille un annuleur d'échos de l'art antérieur utilisé dans la cadre d'un poste téléphonique mains libres. Cet annuleur d'échos est disposé entre le microphone 1 et le haut-parleur 2 du poste téléphonique mains libres, du côté quatre fils d'un coupleur hybride 3 permettant de relier le poste téléphonique mains libres à l'extrémité d'un circuit téléphonique local à deux fils 4. Il sert à éliminer les parasites qui affectent le signal du microphone 1 et qui ont pour origine des échos acoutiques du signal d'excitation du haut-parleur 2. Il recoit sur deux entrées 5, 6 sous forme d'échantillons numériques x (kT), z (kT) délivrés par des échantillonneurs-codeurs 7, 8 fonctionnant en synchronisme à une cadence 1/T égale à celle de 8 kHz du codage MIC, le signal x (t) d'excitation du haut-parleur 2 à l'origine des échos et le signal z (t) du microphone 1 affecté par les échos. Il délivre sur une surtie 9 à la cadence 1/T des échantillons e (kT) du signal du microphone 1, déparasité qui sont appliqués par l'intermédiaire d'un convertisseur-numérique analogique 10 au coupleur hybride 3.

Comme cela est bien connu, l'annuleur d'échos comporte un filtre numérique adaptatif 11 qui simule le trajet d'échos et synthétise une copie du signal d'échos par filtrage des échantillons x (kT) du signal à l'origine des échos, et un soustracteur numérique 12 qui soustrait des échantillons z (kT) du signal affecté par les échos, les échantillons y (kT) de la copie du signal d'échos et qui délivre en sortie 9 de l'annuleur d'échos des échantillons e (kT) du signal du microphone dépourvu d'échos.

Le filtre adaptatif numérique 11 a une entrée signal confondue avec celle 5 de l'annuleur d'échos sur laquelle il reçoit les échantillons x (kT) du signal à filtrer, une entrée de réglage 13 sur laquelle il reçoit des échantillons e (kT) du signal de sortie de l'annuleur d'échos et une sortie signal 14 sur laquelle il délivre les échantillons y (kT) de la copie d'échos. Il est formé, de manière habituelle, par un filtre numérique transversal, non récursif, adaptatif et à domaine de temps qui se règle de manière à éliminer le plus possible le signal d'écho. Il comporte une ligne à retard 15 qui a des prises intermédiaires et un intervalle de temps unitaire égal à une période T d'échantillonnage et qui reçoit les échantillons x (kT) du signal à l'origine des échos, et une centrale de calcul 20 qui effectue, au cours de chaque période d'échantillonnage T la some pondérée des échantillons présents sur les prises intermédiaires de la ligne à retard 15 et la mise à jour des coefficients de pondération.

La ligne à retard à prises intermédiaires 15 est réalisée sous la forme d'un premier registre à décalage à n étages. A chaque instant d'échantillonnage un nouvel échantillon est introduit à l'entrée du premier étage de ce premier registre à décalage et l'échantillon le plus ancien stocké dans le dernier étage de ce registre est perdu. Entre deux instants consécutifs d'échantillonnage ce premier registre est bouclé sur lui-même et cadencé de manière que les échantillons stockés fassent un tour complet et apparaissent chacun une fois sur la sortie 16.

La centrale de calcul 20 comporte un deuxième registre à décalage à n étages 31 utilisé pour le stockage des coefficients de pondération $C_j$ du filtre, un premier multiplicateur rapide 22 à deux entrées suivi d'un sommateur-accumulateur 23 pour calculer les échantillons y (kT) du signal de sortie du filtre ainsi qu'un sommateur numérique 24, un deuxième multiplicateur 25 et un atténuateur 26 employés pour la remise à jour des coefficients de pondération $C_j$.

Le deuxième registre à décalage 21 est bouclé sur lui-même par l'intermédiaire du sommateur numérique 24 qui permet d'ajouter aux coefficients de pondération $C_j$ une valeur de mise à jour $\Delta C_j$. Il est cadencé en synchronisme avec le premier registre à décalage de la ligne à retard 15.

Le premier multiplicateur rapide 22 a une entrée connectée à la sortie du premier registre à décalage de la ligne à retard 15 et l'autre à la sortie du sommateur numérique 24. Il permet de pondérer les échantillons $x [(k-j) T]$ présents dans la ligne à retard 15 par les coefficients $C_j$ du filtre.

Le sommateur accumulateur 23 est échantillonné et remis à zéro avant chaque instant d'échantillonnage.

Entre deux instants d'échantillonnage kT et (k+1)T, il se présente en sortie du premier registre à décalage de la ligne à retard 15 la suite d'échantillons:

$$x[(k-n+1)T]. \ldots, x[(k-1)T], x(kT)$$

Dans la même période de temps une suite de coefficients:

$$C_{n-1}, \ldots C_1, C_o$$

apparait de manière synchrone à la sortie du sommateur numérique 24. Ces deux suites sont multipliées terme à terme par le premier multiplicateur 22 pour donner la suite pondérée:

$$C_{n-1}. x[(k-n+1)T], \ldots C_1 \ x[(k-1)T], C_o \cdot x(kT)$$

dont les termes sont additionnés par le sommateur-accumulateur 23 qui délivre un échantillon y (kT) du signal de copie d'échos:

$$y \ (kT) = \sum_{j=o}^{n-1} C_j \cdot x[(k-j)T]$$

C'est l'expression bien connue du signal de sortie d'un filtre numérique transversal, non récursif à domaine de temps ayant une ligne à retard à n prises et un intrevalle de temps entre prises successives égal à la période d'échantillonage T. C'est également l'expression de la convolution entre le signal à l'origine des échos x(t) échantillonné à la cadence 1/T et une réponse impulsionnelle sensée être celle du trajet d'échos et définie par un échantillonnage à la cadence 1/T représenté par les coefficients de pondération $C_j$.

La réponse impulsionnelle du filtre numérique doit se rapprocher au mieux de celle du trajet d'échos qui n'est pas une donnée fixe mais qui dépend des caractéristiques des liaisons téléphoniques établies. Il est connu pour ce faire d'asservir la valeur de chaque coefficient de pondération $C_j$ de manière à minimiser la valeur de la fonction de corrélation entre le signal x(t−j T) qui est la version du signal x(t) à l'origine des échos disponibles sur la prise de la ligne à retard correspondant au coefficient $C_j$ considéré et le signal de sortie e(t) de l'annuleur d'échos. Ceci se fait de manière classique entre les instants d'échantillonage kT et (k+1)T, en donnant à la valeur de mise à jour $\Delta C_j$ la valeur correctrice:

$$\Delta C_j = \alpha e(kt) \ sgn \ [x \ [(k-j)T] \ ]$$

L'atténuateur 26 pondère les échantillons e(kT) du signal de sortie de l'annuleur d'échos par un coefficient $\alpha$ égal à $2^{-P}$. Il procède en binaire par un simple décalage gauche droite. Le deuxième multiplicateur 25 effectue les produits des signes des échantillons défilant en sortie du premier registre à décalage de la ligne à retard 15 avec la valeur

$$2^{-P} \ e(kT)$$

et délivre entre les instants d'échantillonnage kT et (k+1)T la suite des valeurs de mise à jour:

$$\Delta C_{n-1}, \ldots \Delta C_1, \Delta C_o$$

Le sommateur numérique 24 incorpore les valeurs de mise à jour dans les coefficients de pondération $C_j$.

Les performances de l'annuleur d'échos qui vient d'être décrit dépendent du nombre n de prises de la ligne à retard de son filtre numérique transversal non recursif car la durée maximale de sa réponse impulsionnelle égale à nT doit se rapprocher du temps de réverbération des échos. Or le nombre n est limité par la vitesse de calcul du premier multiplicateur qui doit effectuer n produits vrais par période de d'échantillonnage T ainsi qui par les temps de circulation des informations dans les registres à décalage.

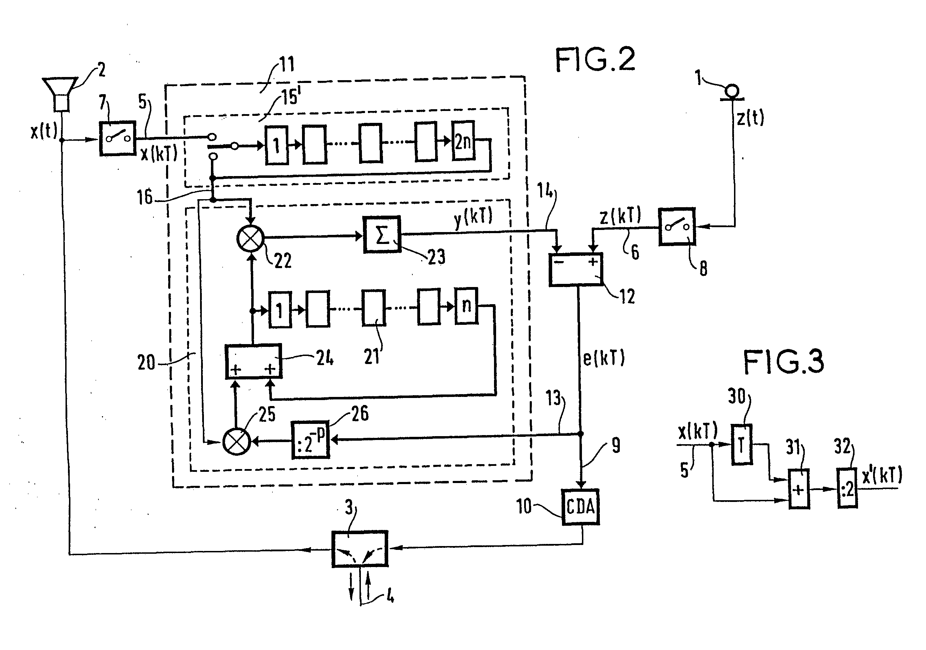

La figure 2 représente un annuleur d'échos selon l'invention utilisé dans le cadre d'un téléphone mains libres. Cet annuleur d'échos reprend la plupart des éléments du précédent qui sont repérés par les mêmes indexations. Il s'en distingue par le fait qui le premier registre à décalage constituant sa ligne à retard 15' a un nombre d'étages double 2 n mais conserve le même cadencement entre deux instants consécutifs d'échantillonnage. On obtient ainsi un doublement de la longueur de la ligne à retard sans modifications de rythme des opérations.

Le doublement des étages du premier registre à décalage aboutit au doublement de la longueur de la ligne à retard car ce registre se comporte alors comme deux registres à décalages à n étages placés à la suite l'un de l'autre qui recevraient l'un les échantillons pairs, l'autre les échantillons impairs du signal x(t) et dont les contenus seraient explorés alternativement tantôt l'un, tantôt l'autre, entre les instants consécutifs d'échantillonnage. Ces deux registres à décalage sont équivalents à deux lignes à retard à n prises et à un intervalle de temps unitaire égal au double de la période d'échantillonnage qui seraient permutées au rythme des échantillonnages ou ce qui revient au même, à une seule ligne à retard à n prises et à intervalle de temps unitaire égal au double de la période d'échantillonnage, les échantillons pairs et les échantillons impairs se retrouvant en alternance aux prises intermédiaires. On se trouve donc en présence d'un filtre numérique transversal non récursif à domaine de temps ayant une ligne à retard à n prises intermédiaires et à intervalle de temps égal au double de la période d'échantillonnage.

Les périodes d'échantillonnage des signaux x(t), z(t) et de la réponse impulsionnelle sont dissociées: tandis que les signaux sont échantillonnés avec une période T, la réponse impulsionnelle est échantillonnée avec une période 2 T. Dans la domaine temporel cela a l'avantage de multiplier par deux la durée d'activité du filtre; par contre, dans le domaine harmonique, la réponse harmonique est soumise à une contrainte: la fonction de transfert a une périodicité de 4 kHz et est imaginiare conjuguée pour deux fréquences symétriques par rapport à 2 kHz; tel n'est évidemment pas le cas de la réponse harmonique de l'acoustique d'une pièce; l'adaptation pondère au mieux les difficultés entre les deux bandes de fréquence de 300 à 2000 Hz et de 2000 à 3400 Hz. La pratique a monté que dans une salle de téléconférence un filtre selon l'invention de 128 coefficients apportait le même affaiblissement d'écho, 7 décibels, qu'un filtre de 256 coefficients selon l'art antérieur.

On peut à nouveau améliorer les performances en effectuant un prétraitement numérique sur le signal x(t) à l'aide du filtre représenté à la figure 3 avant de la soumettre au filtre adaptatif de l'annuleur d'échos. Ce filtre comporte une ligne à retard à deux prises constituée d'un circuit à retard 30 introduisant un délai d'une période T d'échantillonnage, un sommateur numérique 31 additionnant les échantillons présents à l'entrée et à la sortie du circuit à retard 30 et un atténuateur 32 divisant par deux les échantillons de sortie du sommateur numérique 31.

Les échantillons x(kT) du signal x(t) d'excitation du haut parleur sont transformés par ce filtre en échantillons x'(kT)

$$x'(kT) = \frac{x(kT) + x[(k-1)T]}{2}$$

Chacun d'eux est donc remplacé par sa demi-somme avec l'échantillon qui le précède avant d'être appliqué au filtre autoadaptatif de l'annuleur d'échos.

Cette deuxième version est un échantillonage de la réponse impulsionnelle à la période T, mais avec deux coefficients successifs égaux. Elle réalise une description plus précise du signal d'excitation x(t). Une simulation a montré qu'on pouvait escompter un affaiblissement maximum de 25 db pour la première version, de 30 db pour la seconde.

L'annuleur d'échos selon l'invention peut, d'une manière plus générale, comporter un filtre numérique, adaptatif, transversal, non récursif, à domaine de temps ayant une ligne à retard mixte commençant par une section avec un nombre peu important de prises séparées par un intervalle de temps unitaire d'une période d'échantillonnage T et finissant par un section avec un nombre important de prises séparées par un intervalle de temps unitaire double d'un période d'échantillonnage. Cette disposition permet, dans le cas d'un téléphone mains libres, de traiter un écho à faible temps de réverbération dû à un couplage direct entre microphone et haut-parleur et un écho à temps de réverbération important dû à un couplage indirect entre microphone et haut-parleur par l'intermédiaire de l'enceinte du local où est installé le téléphone mains libres.

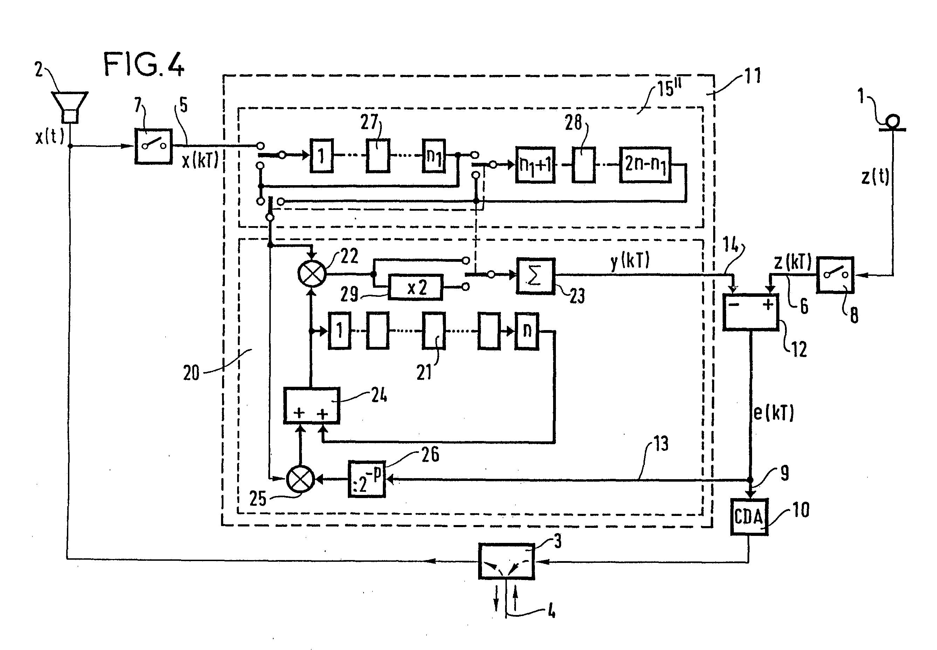

La figure 4 illustre un annuleur d'échos de ce genre. Il reprend la plupart des éléments des annuleurs d'échos représentés aux figures précédentes qui sont repérés sous les mêmes indexations. Il en diffère par sa ligne à retard 15" qui est constituée des deux registres à décalage 27, 28 en cascade et d'un ensemble de commutateurs, ainsi que par la présence d'un circuit doubleur 29 qui peut être intercalé ou non, grâce à un commutateur entre le premier multiplicateur 22 et le sommateur accumulateur 23.

Le registre à décalage 27 a un petit nombre $n_1$ d'étages et constitue la première section de la ligne à retard 15'. Aux instants d'échantillonnage il est connecté par son entrée à celle 5 de l'annuleur d'échos et par sa sortie à l'entrée du registre à décalage 28. Il reçoit ainsi dans sons premier étage chaque nouvel échantillon x(kT) du signal d'excitation du haut-parleur 2 et tranfère au deuxième registre à décalage 28 l'échantillon

$$x[(k-n_1)T]$$

stocké dans son dernier étage. Entre deux instants successifs d'échantillonnage il est bouclé sur lui-même et déconnecté de l'entrée 5 de l'annuleur d'échos comme de celle du registre à décalage 28.

Le registre à décalage 28 a un grand nombre $2(n-n_1)$ d'étages et constitue la deuxième section de la ligne à retard 15''. Aux instants d'échantillonnage son entrée est connectée à la sortie du registre à décalage 27 de sorte qu'il reçoit le plus ancien échantillon stocké dans le registre à décalage 27 et l'échantillon stocké dans son dernier étage est perdu. Entre deux instants successifs d'échantillonnage il est déconnecté du registre à décalage 27 et bouclé sur lui-même.

Entre deux instants successifs d'échantillonage l'entrée du premier multiplicateur 22 est connectée d'abord à la sortie du registre à décalage 27 qui reçoit $n_1$ impulsions de cadencements synchrones avec les $n_1$ premières impulsions de cadencement appliquées au deuxième registre à décalage 21 stockant les coefficients de pondération, puis à la sortie du registre à décalage 28 qui reçoit $n-n_1$ impulsions de cadencement synchrones avec les $n-n_1$ dernières impulsions de cadencement appliquées au deuxième registre à décalage 21. Ainsi entre deux instants successifs d'échantillonnage il apparait successivement à l'entrée du premier multiplicateur 22 tout d'abord l'ensemble des échantillons du signal x(t) stockés dans le registre à décalage 27 puis la moitié des échantillons de ce même signal x(t) stockés dans le registre à décalage 28, cette moitié étant alternativement un ensemble des échantillons pairs et un ensemble des échantillons impairs. Le circuit doubleur 29 est hors service lorsque l'entrée du premier multiplicateur 22 est connectée à la sortie du registre à decalage 27 et en service lorsqu'elle est connectée à la sortie du registre à décalage 28. Il en résulte, en sortie du sommateur accumulateur 23, une sommation pondérée de tous les échantillons stockés dans le registre à décalage 27 et alternativement des échantillons pairs ou impairs stockés dans le registre à décalage 28 conduisant à un échantillon y'(kT) du signal de copie d'échos de la forme:

$$y(kT) = \sum_{j=o}^{n_1-1} C_j \, x[(k-j)T] + 2 \sum_{j=n_1}^{n-1} C_j \, x[(k+n_1-2j)]$$

qui est celui d'un filtre numérique transversal non récursif à domaine de temps ayant une ligne à retard avec une première section de $n_1$ prises intermédiaires séparées par un intervalle de temps unitaire d'une période T d'échantillonnage et avec une deuxième section de $n-n_1$ prises intermédiaires séparées par un intervalle de temps unitaire double de la période T d'échantillonnage.

Le coefficient 2 qui apparait au deuxième terme de la sommation est dû au circuit doubleur 29. Il corrige les effets des différences de vitesse de convergence des coefficients résultant du fait que les $n_1$ premiers coefficients sont mis à jour entre chaque échantillonnage alors que les $2n-n_1$ coefficients restants ne sont mis à jours qu'après deux échantillonnages consécutifs.

**Revendications**

1. Annuleur numérique d'échos pour signaux téléphoniques en bande de base échantillonnés à une cadence régulière 1/T comportant un filtre adaptatif (11) qui élabore un écho synthétique (y(t)) à partir d'un signal (x(t)) de voie téléphonique engendrant un écho réel dans un autre signal (z(t)) de voie téléphonique, qui s'adapte de manière à minimiser la corrélation entre le signal (x(t)) de la voie téléphonique à l'origine de l'écho et le signla (e(t)) de voie téléphonique affecté de l'écho résiduel résultant de l'opposition de l'écho synthétique (y(t)) à l'écho réel et dont le filtre adaptatif est un filtre transversal non récursif à domaine de temps formé d'une ligne à retard à prises intermédiaires (15') et d'une centrale de calcul (20) effectuant au cours de chaque période d'échantillonnage (T) la somme pondérée des échantillons présents sur les prises intermédiaires de la ligne à retard (15') et la mise à jour des coefficients de pondération (Cj), ledit annuleur d'écho étant caractérisé en cè que la ligne à retard (15') a des prises intermédiaires séparées d'un intervalle de temps unitaire égal au double de la période (T) d'échantillonnage.

2. Annuleur d'échos selon la revendication 1, caractérisé en ce que la ligne à retard (15') avec des intervalles entre prises double de la période d'échantillonnage est précédée d'un circuit (30, 31, 32) qui remplace chaque échantillon numérique qu'elle reçoit par sa demi-somme avec l'échantillon qui le précède.

3. Annuleur d'échos selon la revendication 1, caractérisé en ce que la ligne à retard (15'') comporte une section (27) avec un petit nombre de prises intermédiaires séparées par un intervalle de temps unitaire égal à une période (T) d'échantillonnage et une section (28) avec un grand nombre de prises intermédiaires séparées par un intervalle de temps unitaire égale au double d'une période d'échantillonage.

**Patentansprüche**

1. Echokompensierer für Basisband-Telefonsignale, die in regelmäßigem Rhythmus 1/T getastet werden, mit einem Adaptativfilter (11), das ein synthetisches Echo (y(t)) aus einem Telefonkanal-Signal (x(t)) ableitet, wobei dieses Telefonsignal ein wirkliches Echo in einem anderen Telefonkanalsignal (z(t)) erzeugt, das sich so anpaßt, daß die Korrelation zwischen den Telefonkanal-Signal (x(t)), von dem das Echo stammt, und dem Telefonkanal-Signal (e(t)) minimisiert wird, das das von der Verknüpfung des synthetischen Echos (y(t)) mit dem reellen Echo resultierende Restecho aufweist, und wobei das Adaptativfilter ein nicht-rekursives Transversalfilter vom Zeitdomänentyp ist, das von einer Verzögerungsleitung mit Zwischenabgriffen (15') und einem Rechenzentrum (20) gebildet wird, das während jeder Tastperiode (T) die gewichtete Summe der an den Zwischenabgriffen der Verzögerungsleitung (15') abgreifbaren Tastproben und die Nachführung der Wichtungskoeffizienten (Cj) bewirkt, wobei der Echokompensierer dadurch gekennzeichnet ist, daß die Verzögerungsleitung (15') Zwischenabgriffe besitzt, die durch ein Einheitszeitintervall gleich dem Doppelten der Tastperiode (T) voneinander getrennt sind.

2. Echokomponensierer nach Anspruch 1, dadurch gekennzeichnet, daß die Verzögerungsleitung (15'), deren Abstände zwischen den Abgriffen dem Doppelten der Tastperiode entsprechen, hinter einem Schaltkreis (30, 31, 32) liegt, der jede empfangene digitale Tastprobe durch die Halbsumme mit der jeweils vorhergehenden Tastprobe ersetzt.

3. Echokompensierer nach Anspruch 1, dadurch gekennzeichnet, daß die Verzögerungsleitung (15") einen Abschnitt (27) mit einer kleinen Anzahl von Zwischenabgriffen, deren Einheitsabstand einer Tastperiode (T) entspricht, und einen Abschnitt (28) mit einer großen Anzahl von Zwischenabgriffen besitzt, deren Einheitsabstand der doppelten Tastperiode entspricht.

**Claims**

1. A digital echo canceller for telephone signals in a base band, sampled at a regular rate 1/T, comprising an adaptive filter (1) which elaborates a synthetic echo (y(t)) from a telephone channel signal (x(t)) generating a real echo in another telephone channel signal (z(t)), which adapts itself in such a manner so as to minimize the correlation between the telephone channel signal (x(t)) at the origin of the echo and the telephone channel signal (e(t)) having the residual echo resulting from the opposition of the synthetic echo (y(t)) and the real echo, the adaptive filter being a non-recursive time-domain transversal filter constituted by a delay line with intermediate tapping points (15') and by a computing center (20) which calculates during each sampling period (T) the weighted sum of the samples present on the intermediate tapping points of the delay line (15'), and which updates the weighting coefficients (Cj), said echo canceller being characterized in that the delay line (15') has intermediate tapping points which are separated by a unitary time interval equal to twice the sampling period (T).

2. An echo canceller according to claim 1, characterized in that the delay line (15'), whose intervals between tapping points are twice the sampling period, is preceded by a circuit (30, 31, 32) which replaces each received digital sample by its half-sum with the preceding sample.

3. An echo canceller according to claim 1, characterized in that the delay line (15") comprises a section (17) with a small number of intermediate tapping points separated by a unitary time interval equal to a sampling period (T), and a section (28) with a large number of intermediate tapping points separated by a unitary time interval equal to twice a sampling period.

FIG.1

0 082 529

FIG.2

FIG.3

0 082 529

2

FIG.4

0 082 529